# EUROPEAN PATENT SPECIFICATION

(11) **EP 1 851 669 B1**
(45) Date of publication and mention of the grant of the patent: **08.07.2015**
(21) Application number: 06734237.8
(22) Date of filing: 02.02.2006
(51) Int. Cl.: G06F 3/00, G06F 13/12

(54) **DATA STORAGE AND TRANSFER DEVICE AND METHOD**
VORRICHTUNG UND VERFAHREN ZUM SPEICHERN UND ÜBERTRAGEN VON DATEN
DISPOSITIF DE MEMOIRE ET DE TRANSFERT DE DONNEES, ET PROCEDE CORRESPONDANT

(30) Priority: 02.02.2005 US 650738 P
(43) Date of publication of application: 07.11.2007
(73) Proprietor: POCRASS, Alan L., Simi Valley, CA 93065 (US)
(72) Inventor: POCRASS, Alan L., Simi Valley, CA 93065 (US)
(74) Representative: Nederlandsch Octrooibureau
(86) International application number: PCT/US2006/003726
(87) International publication number: WO 2006/084062

(56) References cited:
- US-A- 5 887 145
- US-A1- 2002 089 820
- US-A1- 2004 019 736
- US-A1- 2006 069 819
- US-A1- 2008 014 771
- US-A1- 2008 052 439

## Description

### BACKGROUND OF THE INVENTION

### Field of the Invention

The present invention relates to a data storage and transfer device and method, and, more particularly, to a flash memory drive with integrated male and female connectors and at least one integrated memory card connector. A memory card can be inserted into each memory card connector and data can be copied to or from the memory card from or to the flash memory or one of the integrated male and female connectors. Each integrated memory card connector can be configured to mate with one memory card or a number of different styles of memory cards.

### Description of Related Art

American patent publication US2004/019736 discloses a portable flash memory with extended memory capacity. having a main body connectable to a host computer and an extended body connectable to the main body. Flash memory drives are typically non-mechanical devices that can currently hold from about 8 megabytes (MB) to 4 gigabytes (GB) of data. A flash memory drive, such as a compact flash drive, connects to a computer via a Universal Serial Bus (USB) connector and can transfer data at rates of more than 1 MB per second. Current flash memory drives have male USB connectors that plug into female USB ports on a desktop computer, a laptop computer or a palm device. An advantage of a flash memory device is that it is small, portable, tough and has a large memory capacity. A typical flash memory drive is about the size and weight of a disposable lighter or a pack of gum. It can also be worn around a user's neck, attached to a key chain or easily fit into a handbag.

Currently, flash memory drives do not include any means for transferring information directly to another portable memory device without the use of an intelligent, programmed control device, such as, without limitation, a computer or a palm device. This limits the file sharing capabilities of such drives. Furthermore, the use of such drives limits the number of available USB ports on a computer that may be needed for printers, digital cameras, scanners and the like.

Moreover, current flash memory drives do not support the use of memory cards which can be used for storing and transferring data. Current memory cards have a small form factor and provide a flexible storage device for cameras, PDAs, laptops and all sorts of imaging and computing devices. Currently, memory cards come in a variety of types such as, without limitation:
- CompactFlash (CF) Type I/II cards were developed by SanDisk in 1994. CF cards are based on PCMCIA (Personal Computer Memory Card International Association) specifications and can store up to 1 GB of data. CF cards are approximately 1.7"x1.4" and come in two thicknesses - Type I CF cards are 3.3mm thick, Type II CF cards are 5.5mm;

- IBM Microdrives are the size of a Type II CF card. IBM Microdrives hit the market in 1999 and can store up to 6 GB of data. IBM Microdrives use hard disk drive technology to store data;
- Memory Stick and Memory Stick Pro were developed by Sony. Original memory sticks are about the size of an AA battery (rolled out flat) and can store up to 512 MB of data. Newer Memory Stick Pro can store up to 2 GB of data;
- MultiMedia Cards (MMC) was jointly developed by SanDisk and Siemens. MMC cards are the size of a stamp and weigh about 2 grams. MMC cards can store up to 256 MB of data;
- Secure Digital (SD) cards are designed to have low power requirements and high data transfer rates. SD cards are a bit smaller than MMC cards (still about the size of a stamp) and can store up to 2 GB of data. SD cards also support encryption of content so that manufacturers can sell and distribute copyrighted information with them;
- Smart Media (SM) cards are larger than MMC and SC cards and store up to 128 MB of data (most often used on digital cameras and PDAs);
- Ultra small memory card formats, such as, SanDisk's TransFlash (T-Flash) and Samsung's; and
- MMC-micro cards, for cell phones and other small devices.

Accordingly, a need exists for a flash memory drive that can transfer data to another flash memory drive without the use of a computer. A further need exists for a flash memory drive that can mate with male USB connectors of other devices to enable data to be transferred to or from the flash memory drive without the use of another device. A further need exists for a flash memory drive with one or more integrated memory card connectors to provide the capability to insert a memory card into each memory card connector and transfer data to or from the memory card.

### SUMMARY OF THE INVENTION

The invention is a data storage and transfer device comprising a flash memory chip for storing data; a memory card connector; a male connector; a female connector configured to mate with the male connector; means for controlling a transfer of data to or from at least one of: a memory card inserted in the memory card connector (1) from or to the flash memory chip, (2) via the male connector and/or (3) via the female connector; and the flash memory chip (1) from or to the memory card inserted into the memory card connector, (2) via the male connector and/or (3) via the female connector.

At least one of said male and female connectors can be mated with a corresponding mating connector of another device when data is being transferred thereby to or from the flash memory card or the flash memory chip.

The other device can be another, like data storage and transfer device; a flash memory drive; a desktop or laptop computer; a palm device; a printer; a digital camera; or a scanner.

The device can further include at least one of: a battery coupled to provide power to the flash memory chip, the memory card connector and the means for controlling the transfer of data; means for facilitating electrical connection of at least one of said male and female connectors to a corresponding mating connector of another device; means for initiating the transfer of data; means for selecting the flash memory chip or the flash memory card to transfer data to or from; or means for indicating that the transfer of data is in progress.

The device can further include: means for retrieving digital audio data from the flash memory chip or the memory card; means for decoding the retrieved digital audio data; means for converting the decoded digital audio data to an analog signal; and an output connector for outputting the analog signal.

A plurality of buttons can be provided for enabling user control of (1) the movement of data from or to the flash memory chip or a memory card inserted in the memory card connector and/or (2) the playback of audio data stored in the flash memory chip or a memory card inserted in the memory card connector.

A display screen viewable via the enclosure can be provided to provide a visual indication of information related to data stored in the flash memory chip or a memory card inserted in the memory card connector.

The invention is also a method of transferring data within a data storage and transfer device. The method includes (a) providing a data storage and transfer device having the combination of a flash memory chip for storing data, a memory card connector, a male connector and a female connector configured to mate with the male connector; (b) inserting a memory card into the memory card connector; and (c) causing data to pass to or from the memory card from or to at least one of (1) the flash memory chip or (2) via one of the connectors when said connector is connected to a mating connector of another device.

The device can further include means for setting the memory drive to pass data to or from at least one of the memory card or flash memory chip via the one connector when it is connected to the mating connector of the other device and/or means for initiating the transfer of data from at least one of the memory card or flash memory chip via the one connector when it is connected to the mating connector of the other device.

Lastly, the invention is a data storage and transfer device comprising: an enclosure; a male USB connector at least partially disposed within the enclosure; a female USB connector at least partially disposed within the enclosure; a flash memory chip disposed in the enclosure; a memory card connector at least partially disposed within the enclosure; and means disposed in the enclosure for enabling data to pass to or from at least one of the flash memory chip or a memory card inserted in the memory card connector. Data passed to or from the flash memory chip is passed from or to one of (1) the memory card, (2) via the male USB connector when it is coupled to a mating connector of another device, or (3) via the female USB connector when it is coupled to a mating connector of another device. Data passed to or from the memory card is passed from or to one of (1) the flash memory chip, (2) via the male USB connector when it is coupled to a mating connector of another device, or (3) via the female USB connector when it is coupled to a mating connector of another device.

The other device can be another, like data storage and transfer device; a flash memory drive; a desktop or laptop computer; a palm device; a printer; a digital camera; or a scanner.

The memory can also include at least one of: a battery coupled to provide power to the flash memory chip and the means for enabling data to pass; means for facilitating electrical connection of at least one of said USB connectors to the mating connector of another device; means for initiating the transfer of data; means for selecting the flash memory chip or the flash memory card to transfer data to or from; and means for indicating that the transfer of data is in progress.

A switch can be provided for causing data to be transferred to or from the flash memory chip or the flash memory card as a function of the setting of the switch.

The memory card can be one of a compact flash; a microdrive; a MultiMedia card (MMC); a Secure Digital (SD) card; a Smart Media card; an ultra-small memory card; and an MMC-micro card.

### BRIEF DESCRIPTION OF THE DRAWINGS

Fig. 1 is an exploded perspective view of a data storage and transfer device in accordance with a first embodiment of the present invention;
Fig. 2 is an assembled perspective view of the device of Fig. 1;
Fig. 3 is a perspective view of the device of Fig. 1 interacting with a flash memory drive;
Fig. 4 is a perspective view of the device of Fig. 1 interacting with a USB cable having a male connector;
Fig. 5a is an exploded perspective view of a data storage and transfer device in accordance with a second embodiment of the present invention;
Fig. 5b is an assembled perspective view of the device of Fig. 5a;
Fig. 6 is a perspective view of a data storage and transfer device in accordance with a third embodiment of the present invention;
Fig. 7 is a flow-diagram of a method of transferring information from a device in accordance with the present invention to another device; and
Fig. 8 is a flow-diagram of a method of transferring data between a memory card inserted into a memory card connector of a device in accordance with the present invention and a flash memory chip of the device, or vice versa.

### DETAILED DESCRIPTION OF THE INVENTION

The present invention will be described with reference to the accompanying figures where like reference numbers correspond to like elements.

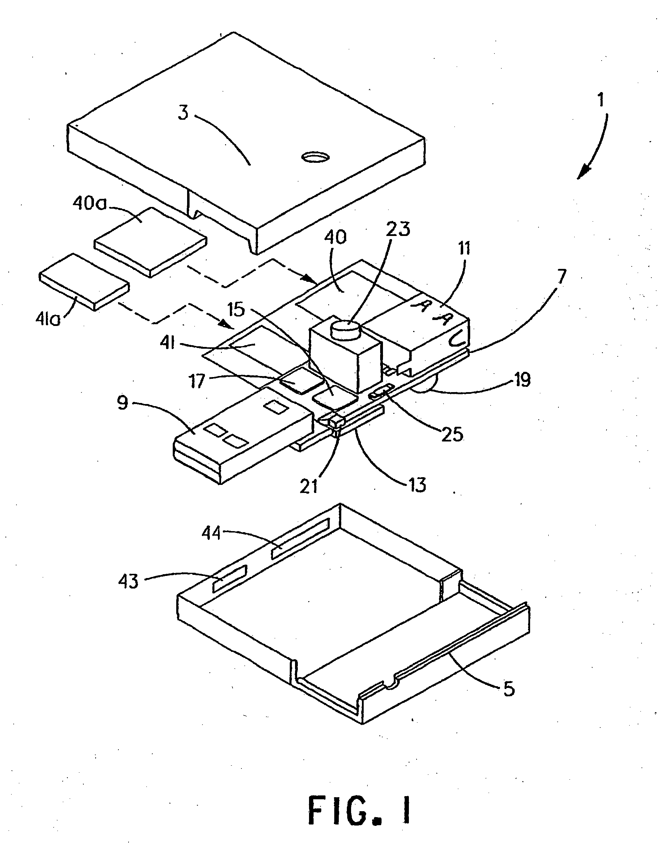

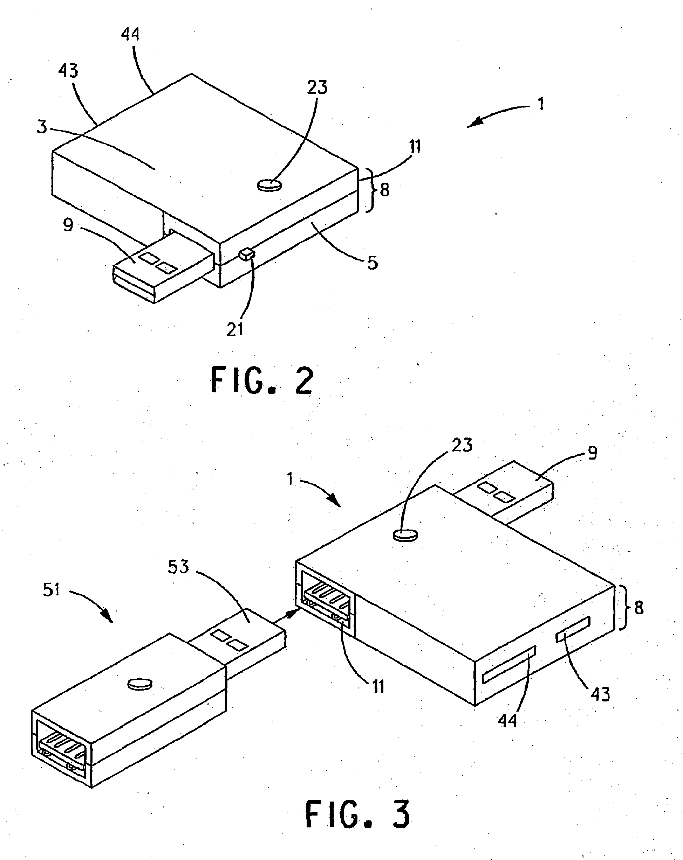

With reference to Figs. 1 and 2, a data storage and transfer device 1 includes a top cover 3, a bottom cover 5 and a printed circuit board 7.

Top cover 3 and bottom cover 5 can mate around printed circuit board 7 and any components mounted thereon to form a protective housing 8. These covers can be made of a variety of materials, but are desirably made from, without limitation, plastic or metal.

Device 1 further includes a male USB connector 9 and a female USB connector 11. Desirably, connectors 9 and 11 are mini or mini-B type USB connectors. However, this is not to be construed as limiting the invention since it is envisioned that one or both of connectors 9 and 11 can be a USB-A type connector.

Male USB connector 9 and female USB connector 11 are mounted on printed circuit board 7 by soldering, surface mount technology, press fitting or other means of mounting components on printed circuit boards known in the art. Male USB connector 9 is configured to mate with female USB connector 11 or with a female USB connector of another intelligent programmed control device such as, without limitation, a desktop or laptop computer, a palm device, and the like, either directly or via an interface cable. Female USB connector 11 is configured to mate with male USB connector 9 or with a male USB connector of another device, such as, without limitation, a flash memory drive, an interface cable, or another device 1 in accordance with the present invention.

Device 1 further includes one or more memory card connector(s) 40 and/or 41 configured to receive one or more memory cards 40a and/or 41a, respectively. Each memory card connector 40, 41 can be configured to receive a single type memory card or can be configured to receive a plurality of different types of memory cards. Protective housing 8 includes one or more slots 44 and/or 43 that facilitate insertion and removal of memory card(s) 40a and/or 41a in a corresponding memory card connector(s) 40 and/or 41, respectively. Each memory card connector 40 and 41 is mounted on the printed circuit board 7 by soldering, surface mount technology, press fitting or other means of mounting components on printed circuit boards known in the art. For purposes of describing the present invention, two memory card connectors are shown. However, this is not to be construed as limiting the invention since it is envisioned that device 1 can include any number of memory card connector(s), including only one (1) or more than two (>2).

The purpose of each memory card connector 40, 41 of device 1 is to receive a corresponding memory card for the purpose of copying data to or from said memory card under the control of a download/copy logic chip 15. The configuration or layout of device 1 shown in the figures is not to be construed as limiting the invention since it is envisioned that device 1 can have any suitable and/or desirable configuration or layout.

In addition to printed circuit board 7 supporting male USB connector 9, female USB connector 11, one or more memory card connector(s) 40, 41 and download/copy logic chip 15, one or more flash memory chips 13, a hub logic chip 17 and a battery 19 can be mounted on printed circuit board 7 in a manner known in the art. Hereafter, it will be assumed that only one flash memory chip 13 is present. However, this is not to be construed as limiting the invention.

Each memory card connector 40, 41 is configured to receive at least one type of memory card. Examples of types of memory cards that memory card connector(s) 40, 41 of device 1 can be configured to receive include: a compact flash (CF) card, an IBM micro drive card, a Memory Stick Card, a Memory Stick Pro Card, a multimedia (MMC) card, a secured digital (SD) card, a smart media (SM) card, an ultra-small memory card, an MMC-micro card, and the like. However, this is not to be construed as limiting the invention since it is envisioned that device 1 can also or alternatively include any other suitable and/or desirable memory card connector configured to receive one or more other types or styles of memory cards. Accordingly, the foregoing list of memory cards is not to be construed as limiting the invention.

Flash memory chip 13 is configured to store data, e.g., anywhere from 8 megabytes to 1 gigabyte of data. However, this is not to be construed as limiting the invention since it is envisioned that flash memory chip 13 can have any suitable and/or desirable data storage capacity. Download/copy logic chip 15 facilitates the transfer of data to or from flash memory chip 13 and/or a memory card 40a or 41 a inserted into a memory card connector 40a or 41a, respectively. Hub logic chip 17 facilitates connection of one or both of male USB connector 9 and female USB connector 11 to a universal serial bus having connected thereto one or more other devices, such as, without limitation, a flash memory drive, another device 1 in accordance with the present invention, a desktop or laptop computer, a palm device, a printer, a digital camera, a scanner, and the like.

Battery 19 provides power to flash memory chip 13, download/copy logic chip 15, hub logic chip 17, and any other component of device 1 requiring electrical power for its operation when device 1 is not attached to the USB port of an externally powered device, such as a computer, palm device, etc. Battery 19 enables the combination of flash memory chip 13, download/copy logic chip 15, hub logic chip 17 and any other component of device 1 requiring electrical power for its operation to: (1) transfer data from flash memory chip 13 to another device, such as, the flash memory chip of another flash memory drive, or vice versa, attached to male USB connector 9 or female USB connector 11 without the use of externally provided power; (2) transfer data from a memory card 40a or 41 a inserted into the corresponding memory card connector 40 or 41, respectively, to flash memory chip 13, or vice versa, without the use of externally provided power; and/or (3) transfer data from a memory card 40a or 41 a inserted into the corresponding memory card connector 40 or 41, respectively, to another device, such as, the flash memory chip of another flash memory drive, or vice versa, attached to male USB connector 9 or female USB connector 11 without the use of externally provided power.

A logic chip (not shown) can be provided for enabling the charging of battery 19 when male USB connector 9 or female USB connector 11 of flash memory drive 1 is connected to an externally powered device. While battery 19 is used in the present embodiment, it is envisioned that other power supplies, such as one or more solar cells, can be utilized to power chips 13, 15, and 17 and/or charge battery 19. While flash memory chip 13, download/copy logic chip 15, hub logic chip 17, and the logic chip for enabling the battery to charge are described above as separate chips, it is envisioned that that the function(s) of each of these chips can be incorporated into more or less, e.g., one or two chips. Accordingly, the number of chips described herein is not to be construed as limiting the invention.

With reference to Fig. 3 and with continuing reference to Figs. 1 and 2, a flash memory drive 51, either a prior flash memory drive or a flash memory drive with integrated male and female connectors of the type disclosed in U.S. Patent Application No. 10/028,382, filed January 3, 2005, (hereinafter "the '382 application") and device 1 can be joined together by inserting the male USB connector 53 of flash memory drive 51 into the female USB connector 11 of device 1 for the purpose of transferring or copying data from the flash memory chip of flash memory drive 51 to at least one of the flash memory chip 13 of device 1 or a flash card 40a or 41a inserted into connector 40 or 41, respectively, of device 1, or vice versa.

Each device 1 can include a master/slave switch 21 coupled to download/copy logic chip 15 for setting device 1 as either a master or a slave. In operation, when flash memory drive 51 and device 1 are joined together with switch 21 set to the master portion, data transfers from device 1 to the flash memory chip of flash memory drive 51 under the control of download/copy logic chip 15. Alternatively, when flash memory drive 51 and device 1 are joined together with switch 21 set to the slave position, data transfers from the flash memory chip of flash memory drive 51 to device 1 under the control of download/copy logic chip 15.

Switch 21 can be a multi-position switch that not only sets device 1 as a master or slave, but also causes download/copy logic chip 15 to transfer data to or from flash memory chip 13, a memory card 40a or 40b inserted into a memory card connector 40 or 41, or both, either in parallel or serially, i.e., where the memory of flash memory chip 13 and the memory of the memory card are contiguous memory. For example, a first setting of switch 21 can cause download/copy logic chip 15 to transfer data from the flash memory chip of flash memory drive 51 to flash memory chip 13 of device 1, or vice versa. Another setting of switch 21 can cause download/copy logic chip 15 to transfer data from the flash memory chip of flash memory drive 51 to a memory card inserted into a memory card connector of device 1, or vice versa. Lastly, another setting of switch 21 can cause download/copy logic chip 15 to transfer data from the flash memory chip of flash memory drive 51 to flash memory chip 13 and a memory card inserted into a memory card connector of device 1, either in parallel or serially, i.e., flash memory chip 13 first followed by the memory card, or vice versa.

When two devices 1 in accordance with the present invention are joined together via the male USB connector 9 of one device 1 and the female USB connector 11 of the other device 1, the device 1 having its switch 21 set to the master position transfers data to the device 1 having its switch 21 set to the slave position in the manner discussed above. To avoid potential conflicts, if both switches 21 are set to the same position, i.e., the master position or the slave position, no transfer data transfer occurs. Thus, as can be seen, a device 1 in accordance with the present invention can be used with other devices 1 in accordance with the present invention, with prior art flash memory drives, or with flash memory drives with integrated male and female connectors as disclosed in the '382 application.

Desirably, when male USB connector 9 of device 1 is plugged into a female USB connector of an intelligent device, such as, a computer, a palm device, or other like intelligent device that is configured or programmed to control the transfer of data, and device 1 is set as a slave by master/slave switch 21, the transfer of data to or from device 1 in the manner described above can be controlled via the intelligent device in a manner known in the art. Thus, desirably, it is only when master/slave switch 21 sets device 1 as the master that download/copy logic chip 15 is operative for controlling the transfer of data to or from flash memory chip 13 of device 1 or a memory card inserted into a corresponding memory card connector of device 1. In contrast, when master/slave switch 21 sets device 1 as a slave, data can be transferred to or from flash memory chip 13 and/or a memory card inserted into a corresponding memory card connector under the control of another intelligent device coupled to device 1 via connector 9 or 11.

A push button switch 23 can be provided on printed circuit board 7 and accessible via top cover 3 to allow for manual activation of the transfer of data. For example, in response to activation of push button switch 23 of a device 1 set as a master by its master/slave switch 21, download/copy logic chip 15 transfers data from device 1 to another device coupled to device 1 via connector 9 or 11. However, the use of push button switch 23 is not to be construed as limiting the invention since it is envisioned that other control means can be utilized to cause the transfer of data to or from device 1. For example, device 1 can be responsive to the setting of master/slave switch 21 for transferring data to or from device 1.

Each device 1 can also include an optional lamp 25 that illuminates when data is being transferred to or from the device 1. Lamp 25 may be selected from any light emitting device, e.g., a light emitting diode, suitable for such application. Lamp 25 may be a mutli-colored lamp whereupon a first color is illuminated when data is being transferred from device 1 and a second color is illuminated when data is being transferred into device 1. Alternatively, a single lamp having multiple colors can be replaced with multiple lamps to perform the same function.

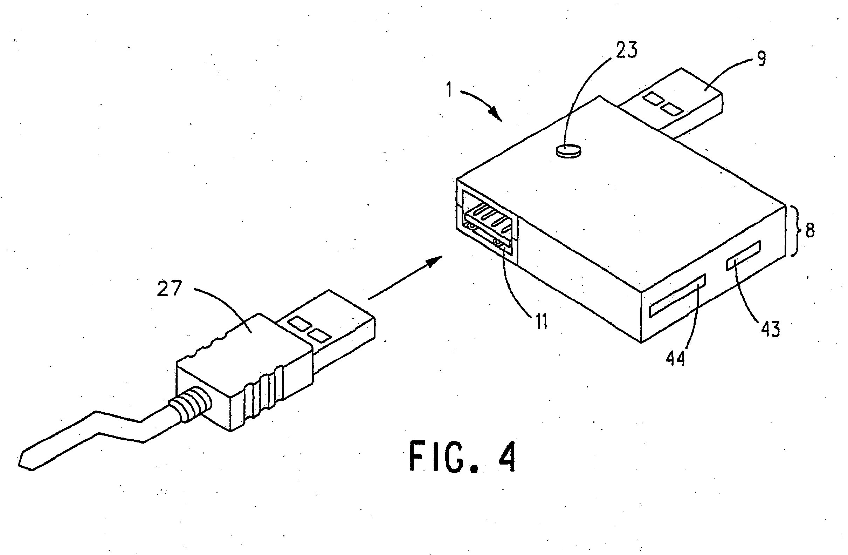

With reference to Fig. 4 and with continuing reference to Figs. 1-3, device 1 may also be used to maximize the available USB ports on a computer or palm device. Specifically, male USB connector 9 of device 1 may be inserted into a USB port of a computer (not shown). Thereafter, female USB connector 11 can accept a male USB connector 27 of a USB cable coupled at its other end to a peripheral device such as, without limitation, a camera, a printer, a scanner or another flash memory drive thereby enabling said peripheral device to utilize the same USB port on the computer as device 1.

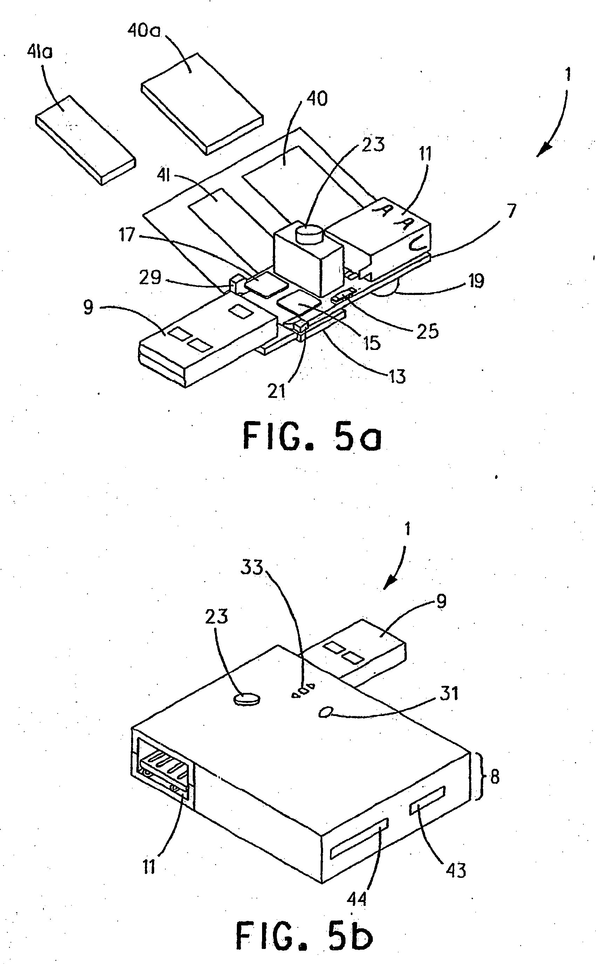

With reference to Figs. 5a and 5b, a second embodiment of device 1 includes a digital audio chip 29 and an output connector 31, such as a headphone jack. Digital audio chip 29 includes a digital signal processor (DSP), an amplifier and a digital-to-analog converter (DAC). The DSP can retrieve a digital audio data file from flash memory chip 13 or a flash memory card 40a or 41 a inserted into memory card connector 40 or 41, respectively, and can decode said retrieved digital audio data file utilizing a decompression algorithm, such as an mp3 or a wma decompression algorithm, that undoes the compression of the digital audio data stored in a corresponding compressed format. Then, the DAC converts the decompressed audio data file back into analog audio data. Finally, the amplifies boosts the strength of the analog signal and sends it to output connector 31.

Buttons 33 can be provided on top cover 3 for controlling digital audio chip 29. Buttons 33 can perform such functions such as, without limitation, volume control, playing, stopping, pausing, skipping, rewinding, fast forwarding, deleting and the like. Buttons 33 can also enable selection of where the digital audio data file is stored and/or retrieved, namely, flash memory chip 13 or a flash memory card 40a or 41a inserted into memory card connector 40 or 41, respectively. While push button switch 23 is shown, the function provided by push button switch 23 can be incorporated into one or more buttons 33, whereupon push button switch 23 can be omitted from the embodiment shown in Figs. 5a and 5b.

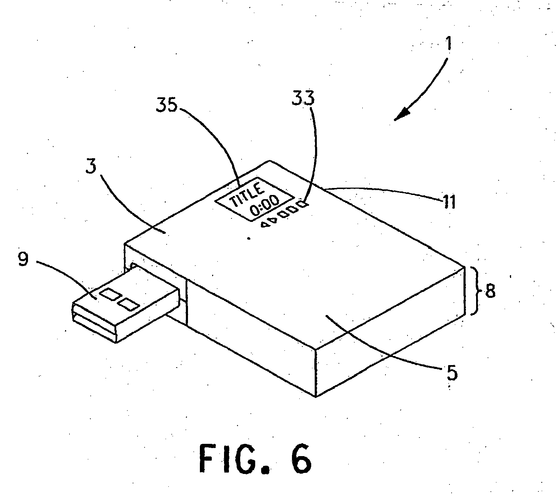

With reference to Fig. 6, a third embodiment device 1 includes a display screen 35 viewable via top cover 3. Display screen 35 can be connected to suitable circuitry (not shown) mounted on printed circuit board 7 for providing a visual indication of the name of a data file, the title of a digital audio data file, the time remaining in a song and other useful and/or desirable information. This embodiment can replace push button 23 and/or master/slave switch 21 with buttons 33. Device 1 can be programmed whereupon the combination of display screen 35 and buttons 33 can cooperate to provide to a user of device 1 a menu that includes user selectable options for controlling device 1 to perform any suitable and/or desirable function, such as, without limitation, selecting a digital audio data file for playing, selecting a data file for deletion, selecting a desired equalization to be applied to digital audio data files being played, selecting a data file to be moved, and the like.

Device 1 can also or alternatively be programmed so that download/copy logic chip 15 is responsive to the actuation of one or more buttons 33 for setting the device to be a master or a slave. A visual indication of "Master" or "Slave" can be provided on display screen 35. A signal can also be sent to download/copy logic chip 15 to initiate the transfer of data to or from flash memory chip 13 or a flash memory card 40a or 41a inserted in connector 40 or 41, respectively, when another one of the buttons 33 is pressed. A visual indication such as "Transfer in Progress" may be provided on display screen 35, thereby obviating the need for LED 25. Display screen 35 can be a liquid crystal display (LCD), a plasma screen or the like.

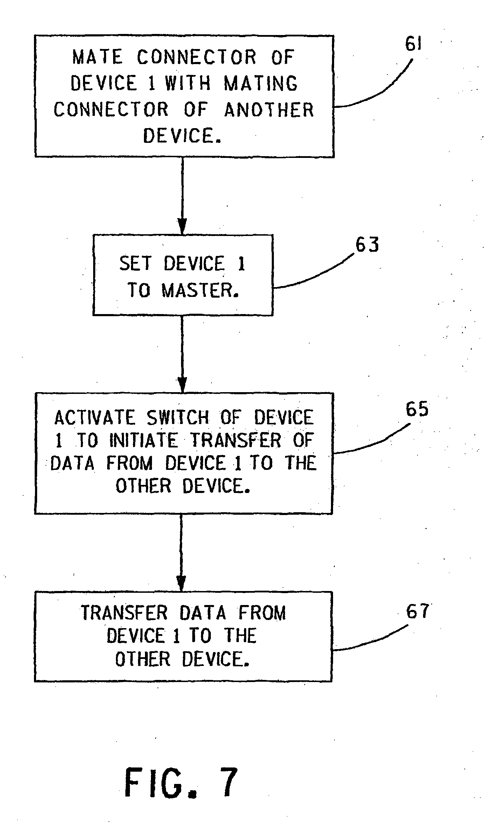

With reference to Fig. 7, the present invention is also a method for transferring, i.e., copying or moving, data to or from flash memory chip 13 or a memory card 40a or 41a inserted into memory card connector 40 or 41, respectively, of device 1. The method begins at step 61 by mating the male connector (or female connector) of device 1 with the female connector (or male connector) of another device. Next, at step 63, device 1 is set to the master mode. Then, at step 65, a switch is activated to initiate the transfer of data from the flash memory chip 13 or a memory card 40a or 41 a of device 1. At step 67, the data is transferred from device 1 to the other device.

The other device can be another device 1 set to a slave, a flash memory drive with integrated male and female connectors of the type disclosed in the '382 application, a prior art flash memory drive, and the like. Also or alternatively, when device 1 is set to the slave mode and is coupled via its male connector with the female connector of a computer, a palm device, or other like intelligent, programmed control device, the transfer of data to or from the flash memory chip 13 or a memory card 40a or 41a can be controlled by the computer, palm device, or other like intelligent device.

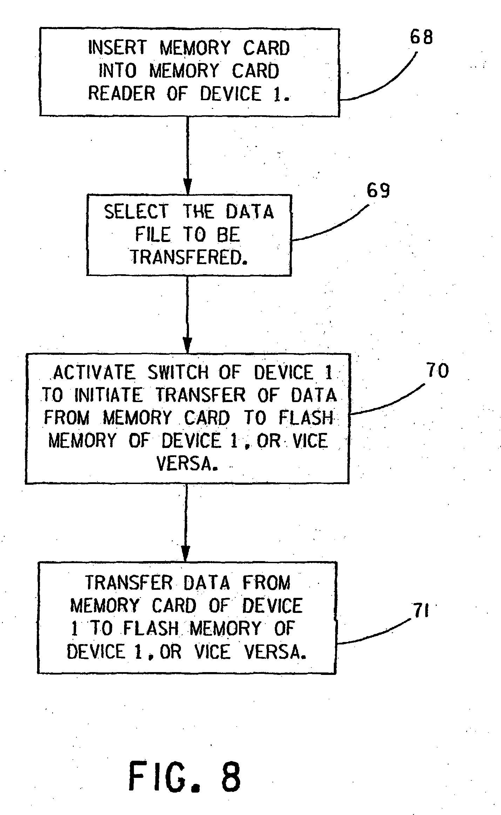

With reference to Fig. 8, the present invention is also a method for transferring data to or from flash memory chip 13 from or to a memory card 40a or 41a inserted into memory card connector 40 or 41. The method begins at step 68 by inserting a flash memory card 40a or 41 a into a memory card connector 40 or 41 of device 1. Next, at step 69, the data file to be copied is selected in either the memory card 40 or 41 or the flash memory chip 13. The selection of the data file to be copied can be made in any suitable and/or desirable manner. For example, where device 1 includes display screen 35 and buttons 33, said buttons and display screen can be utilized to select the data file to be copied. Then, at step 70, a switch is activated to initiate the transfer of data from the memory card 40 or 41 to the flash memory chip 13, or vice versa. The direction of data transfer from the memory card 40 or 41 to the flash memory chip 13, or vice versa, can be selected in any suitable and/or desirable manner. For example, where device 1 includes display 35 and buttons 33, said display and buttons can be utilized to select the direction of data transfer. At step 71, the data transfers from the memory card 40 or 41 to the flash memory chip 13, or vice versa.

## Claims

1. A data storage and transfer device (1) comprising:
a flash memory chip (13) for storing data, and a memory card connector (40, 41),\ **characterised in that** the data storage and transfer device (1) further comprises:
a male connector (9); a female connector (11) configured to mate with the male connector (9); and means (15) for controlling a transfer of data to or from at least one of: a memory card (40a, 41a) inserted in the memory card connector (40, 41) from or to the flash memory chip (13), via the male connector (9) and/or via the female connector (11); and the flash memory chip (13) from or to the memory card (40a, 41a) inserted into the memory card connector (40, 41), via the male connector (9) and/or via the female connector (11).

2. The device of claim 1, wherein at least one of said male and female connectors (9, 11) is mated with a corresponding mating connector (53) of another device (51) when data is being transferred thereby to or from the flash memory card (40a, 41a) or the flash memory chip (13).

3. The device of claim 2, wherein the other device (51) is one of: another data storage device (1) of the same type; a flash memory drive (51); a desktop or laptop computer; a palm device; a printer; a digital camera; and a scanner.

4. The device of claim 1, further comprising at least one of: a battery (19) coupled to provide power to the flash memory chip (13), the memory card connector (40, 41) and the means (15) for controlling the transfer of data; means for facilitating electrical connection of at least one of said male and female connectors (9, 11) to a corresponding mating connector (53) of another device (51); means for initiating the transfer of data; means for selecting the flash memory chip (13) or the flash memory card (40a, 41a) to transfer data to or from; and means (25) for indicating that the transfer of data is in progress.

5. The device of claim 1, further comprising: means (29) for retrieving digital audio data from the flash memory chip (13) or the memory card; means (29) for decoding the retrieved digital audio data; means (29) for converting the decoded digital audio data to an analog signal; and an output connector (31) for outputting the analog signal.

6. The device of claim 1, further comprising a plurality of buttons (33) for enabling user control of the movement of data from or to the flash memory chip (13) or a memory card (40a, 41a) inserted in the memory card connector (40, 41) and/or the playback of audio data stored in the flash memory chip (13) or a memory card (40a, 41 a) inserted in the memory card connector (40, 41).

7. The device of claim 6, further comprising a display screen (35) viewable via the enclosure for providing a visual indication of information related to data stored in the flash memory chip (13) or a memory card (40a, 41a) inserted in the memory card connector (40, 41).

8. The device of claim 1, wherein the memory card (40a, 41a) is one of: a compact flash; a microdrive; a MultiMedia card (MMC); a Secure Digital (SD) card; a Smart Media card; an ultra-small memory card; and an MMC-micro card.

9. The device of claim 1, wherein the male and female connectors (9, 11) are USB connectors.

10. A method of transferring data within a data storage and transfer device (1) comprising: (a) providing a data storage and transfer device (1) having the combination of a flash memory chip (13) for storing data, a memory card connector (40, 41), a male connector (9) and a female connector (11) configured to mate with the male connector (9);
(b) inserting a memory card (40a, 41a) into the memory card connector (40, 41); and
(c) causing data to pass to or from the memory card (40a, 41a) from or to at least one of the flash memory chip (13)or via one of the connectors (9, 11) when said connector (9, 11) is connected to a mating connector (53) of another device (51).

11. The method of claim 10, wherein the device (1) further includes means (15) for setting a memory drive to pass data to or from at least one of the memory card (40a, 41a) or flash memory chip (13) via the one connector (9, 11) when it is connected to the mating connector (53) of the other device (51).

12. The method of claim 10, wherein the device (1) further includes means (15) for initiating the transfer of data from at least one of the memory card (40a, 41 a) or flash memory chip (13) via the one connector (9, 11) when it is connected to the mating connector (53) of the other device (51).

13. A data storage and transfer device according to claim 1, further comprising an enclosure (8),
wherein the male connector (9) is a male USB connector at least partially disposed within the enclosure (8), the female connector (11) is a female USB connector at least partially disposed within the enclosure (8), the flash memory chip (13) is disposed in the enclosure (8), the memory card connector (40, 41) is at least partially disposed within the enclosure (8), and the means (15) for controlling a transfer of data are disposed in the enclosure (8).

14. The device of claim 13, further comprising at least one of: a battery (19) coupled to provide power to the flash memory chip (13) and the means (15) for enabling data to pass; means for facilitating electrical connection of at least one of said USB connectors (9, 11) to the mating connector (53) of another device (51); means for initiating the transfer of data; means for selecting the flash memory chip (13) or the flash memory card (40a, 41a) to transfer data to or from; and means (25) for indicating that the transfer of data is in progress.

15. The device of claim 13, further comprising a switch (23) for causing data to be transferred to or from the flash memory chip (13) or the flash memory card (40a, 41a) as a function of the setting of the switch (23).

## Patentansprüche

1. Datenspeicher- und Datenübertragungsvorrichtung (1), die umfasst:
einen Flash-Speicher-Chip (13) zum Speichern von Daten und ein Speicherkartenverbindungselement (40, 41), **dadurch gekennzeichnet, dass** die Datenspeicher- und Datenübertragungsvorrichtung (1) ferner umfasst:
ein Steckverbindungselement (9); ein Buchsenverbindungselement (11), das so konfiguriert ist, dass es mit dem Steckverbindungselement (9) zusammenpasst; und Mittel (15) zum Steuern einer Datenübertragung zu oder von mindestens einem von: einer Speicherkarte (40a, 41a), die in das Speicherkartenverbindungselement (40, 41) eingesteckt ist, von bzw. zu dem Flash-Speicher-Chip (13) über das Steckverbindungselement (9) und/oder über das Buchsenverbindungselement (11); und dem Flash-Speicher-Chip (13) von bzw. zu der Speicherkarte (40a, 41a), die in das Speicherkartenverbindungselement (40, 41) eingesteckt ist, über das Steckverbindungselement (9) und/oder über das Buchsenverbindungselement (11).

2. Vorrichtung nach Anspruch 1, wobei das Steck- oder das Buchsenverbindungselement (9, 11) mit einem entsprechenden Gegenverbindungselement (53) einer weiteren Vorrichtung (51) zusammenpasst, wenn Daten dadurch zu oder von der Flash-Speicherkarte (40a, 41a) oder dem Flash-Speicher-Chip übertragen werden.

3. Vorrichtung nach Anspruch 2, wobei die weitere Vorrichtung (51) eine ist von:
einer weiteren Datenspeichervorrichtung (1) desselben Typs; einem Flash-Speicherlaufwerk (51); einem Desktop- oder einem Laptop-Computer; einem Palm-Gerät; einem Drucker; einer digitalen Kamera; und einem Scanner.

4. Vorrichtung nach Anspruch 1, die ferner mindestens eines umfasst von: einer Batterie (19), die angeschlossen ist, den Flash-Speicher-Chip (13), das Speicherkartenverbindungselement (40, 41) und die Mittel (15) zum Steuern der Datenübertragung mit Leistung zu versorgen; Mittel zum Erleichtern einer elektrischen Verbindung des Steck- und/oder des Buchsenverbindungselements (9, 11) mit einem entsprechenden Gegenverbindungselement (53) einer weiteren Vorrichtung (51); Mittel zum Einleiten der Datenübertragung; Mittel zum Auswählen des Flash-Speicher-Chips (13) oder der Flash-Speicherkarte (40a, 41a), um Daten nach oder von dort zu übertragen; und Mittel (25) zum Angeben, dass die Datenübertragung im Gang ist.

5. Vorrichtung nach Anspruch 1, die ferner umfasst: Mittel (29) zum Gewinnen von digitalen Audiodaten von dem Flash-Speicher-Chip (13) oder der Speicherkarte; Mittel (29) zum Decodieren der wiedergewonnenen digitalen Audiodaten; Mittel (29) zum Umsetzen der decodierten digitalen Audiodaten in ein analoges Signal; und ein Ausgangsverbindungselement (31) zum Ausgeben des analogen Signals.

6. Vorrichtung nach Anspruch 1, die ferner mehrere Tasten (33) umfasst, um eine Anwendersteuerung der Bewegung der Daten von oder zu dem Flash-Speicher-Chip (13) oder einer Speicherkarte (40a, 41a), die in das Speicherkartenverbindungselement (40, 41) eingesteckt ist, und/oder die Wiedergabe von Audiodaten zu ermöglichen, die in dem Flash-Speicher-Chip (13) oder einer Speicherkarte (40a, 41 a), die in das Speicherkartenverbindungselement (40, 41) eingesteckt ist, gespeichert sind.

7. Vorrichtung nach Anspruch 6, die ferner einen Anzeigebildschirm (35) umfasst, der durch das Gehäuse betrachtet werden kann, um eine visuelle Angabe von Informationen bezüglich der Daten, die in dem Flash-Speicher-Chip (13) oder einer Speicherkarte (40, 41a), die in das Speicherkartenverbindungselement (40, 41) eingesteckt ist, gespeichert sind, zu liefern.

8. Vorrichtung nach Anspruch 1, wobei die Speicherkarte (40a, 41a) eine ist von: einem kompakten Flash-Speicher; einem Mikrolaufwerk; einer Multimediakarte (MMC); einer Secure-Digital-Karte (SD-Karte); einer Smart-Media-Karte; einer ultrakleinen Speicherkarte; und einer MMC-Mikrokarte.

9. Vorrichtung nach Anspruch 1, wobei das Steck- und das Buchsenverbindungselement (9, 11) USB-Verbindungselemente sind.

10. Verfahren zum Übertragen von Daten innerhalb einer Datenspeicher- und Datenübertragungsvorrichtung (1), das umfasst: (a) Bereitstellen einer Datenspeicher- und Datenübertragungsvorrichtung (1) mit der Kombination eines Flash-Speicher-Chips (13) zum Speichern von Daten, einem Speicherkartenverbindungselement (40, 41), einem Steckverbindungselement (9) und einem Buchsenverbindungselement (11), das konfiguriert ist, mit dem Steckverbindungselement (9) zusammenzupassen;
(b) Einfügen einer Speicherkarte (40a, 41a) in das Speicherkartenverbindungselement (40, 41); und (c) Bewirken, dass Daten von oder zu der Speicherkarte (40a, 41a) von oder zu mindestens einem des Flash-Speicher-Chips (13) oder über eines der Verbindungselemente (9, 11) übermittelt werden, wenn das Verbindungselement (9, 11) mit einem Gegenverbindungselement (53) einer weiteren Vorrichtung (51) verbunden ist.

11. Verfahren nach Anspruch 10, wobei die Vorrichtung (1) ferner Mittel (15) enthält, um ein Speicherlaufwerk einzustellen, Daten zu oder von mindestens einem der Speicherkarte (40a, 41a) oder dem Flash-Speicher-Chip (13) über das eine Verbindungselement (9, 11) zu übermitteln, wenn es mit dem Gegenverbindungselement (53) der weiteren Vorrichtung (51) verbunden ist.

12. Verfahren nach Anspruch 10, wobei die Vorrichtung (1) ferner Mittel (15) enthält, um die Datenübertragung von mindestens einem der Speicherkarte (40a, 41a) oder dem Flash-Speicher-Chip (13) über das eine Verbindungselement (9, 11) einzuleiten, wenn sie mit dem Gegenverbindungselement (53) der weiteren Vorrichtung (51) verbunden ist.

13. Datenspeicher- und Datenübertragungsvorrichtung nach Anspruch 1, die ferner ein Gehäuse (8) umfasst,
wobei das Steckverbindungselement (9) ein USB-Steckverbindungselement ist, das zumindest teilweise innerhalb des Gehäuses (8) angeordnet ist, das Buchsenverbindungselement (11) ein USB-Buchsenverbindungselement ist, das zumindest teilweise innerhalb des Gehäuses (8) angeordnet ist, der Flash-Speicher-Chip (13) in dem Gehäuse (8) angeordnet ist, das Speicherkartenverbindungselement (40, 41) zumindest teilweise innerhalb des Gehäuses (8) angeordnet ist und die Mittel (15) zum Steuern einer Datenübertragung in dem Gehäuse (8) angeordnet sind.

14. Vorrichtung nach Anspruch 13, die ferner mindestens eines umfasst von: einer Batterie (19), die angeschlossen ist, um den Flash-Speicher-Chip (13) und die Mittel (15) zum Ermöglichen, dass Daten übermittelt werden, mit Leistung zu versorgen; Mittel zum Erleichtern einer elektrischen Verbindung von mindestens einem der USB-Verbindungselemente (9, 11) mit dem Gegenverbindungselement (53) einer weiteren Vorrichtung (51); Mittel zum Einleiten der Datenübertragung; Mittel zum Auswählen des Flash-Speicher-Chips (13) oder der Flash-Speicher-Karte (40a, 41a), um Daten nach oder von dort zu übertragen; und Mittel (25) zum Angeben, dass die Datenübertragung im Gang ist.

15. Vorrichtung nach Anspruch 13, die ferner einen Schalter (23) umfasst, um zu bewirken, dass Daten zu oder von dem Flash-Speicher-Chip (13) oder der Flash-Speicherkarte (40a, 41a) als eine Funktion der Einstellung des Schalters (23) übertragen werden.

## Revendications

1. Dispositif de stockage et de transfert de données (1) comprenant :
une puce de mémoire flash (13) pour stocker des données, et un connecteur de carte mémoire (40, 41), **caractérisé en ce que** le dispositif de stockage et de transfert de données (1) comprend en outre :
un connecteur mâle (9) ; un connecteur femelle (11) configuré pour s'accoupler avec le connecteur mâle (9) ; et un moyen (15) pour commander un transfert de données à ou depuis au moins l'un: d'une carte mémoire (40a, 41a) insérée dans le connecteur de carte mémoire (40, 41) depuis ou à la puce de mémoire flash (13), via le connecteur mâle (9) et/ou via le connecteur femelle (11) ; et de la puce de mémoire flash (13) depuis ou à la carte mémoire (40a, 41a) insérée dans le connecteur de carte mémoire (40, 41), via le connecteur mâle (9) et/ou via le connecteur femelle (11).

2. Dispositif selon la revendication 1, dans lequel au moins l'un desdits connecteurs mâle et femelle (9, 11) est accouplé avec un connecteur d'accouplement (53) correspondant d'un autre dispositif (51) lorsque des données sont transférées par celui-ci à ou depuis la carte mémoire flash (40a, 41a) ou la puce de mémoire flash (13).

3. Dispositif selon la revendication 2, dans lequel l'autre dispositif (51) est l'un : d'un autre dispositif de stockage de données (1) du même type ; d'un lecteur de mémoire flash (51) ; d'un ordinateur de bureau ou portable ; d'un dispositif de poche ; d'une imprimante ; d'une caméra numérique et d'un scanner.

4. Dispositif selon la revendication 1, comprenant en outre au moins l'un : d'une batterie (19) couplée pour alimenter en énergie la puce de mémoire flash (13), le connecteur de carte mémoire (40, 41) et le moyen (15) pour commander le transfert de données ; d'un moyen pour faciliter la connexion électrique d'au moins l'un desdits connecteurs mâle et femelle (9, 11) à au moins un connecteur d'accouplement (53) correspondant d'un autre dispositif (51) ; d'un moyen pour lancer le transfert de données ; d'un moyen pour sélectionner la puce de mémoire flash (13) ou la carte mémoire flash (40a, 41a) pour transférer des données à ou depuis celle-ci ; et d'un moyen (25) pour indiquer que le transfert de données est en cours.

5. Dispositif selon la revendication 1, comprenant en outre : un moyen (29) pour récupérer des données audio numériques depuis la puce de mémoire flash (13) ou la carte mémoire ; un moyen (29) pour décoder les données audio numériques récupérées ; un moyen (29) pour convertir les données audio numériques décodées en un signal analogique ; et un connecteur de sortie (31) pour délivrer en sortie le signal analogique.

6. Dispositif selon la revendication 1, comprenant en outre une pluralité de boutons (33) pour permettre une commande par l'utilisateur du déplacement de données depuis ou à la puce de mémoire flash (13) ou une carte mémoire (40a, 41a) insérée dans le connecteur de carte mémoire (40, 41) et/ou de la lecture de données audio stockées dans la puce de mémoire flash (13) ou une carte mémoire (40a, 41a) insérée dans le connecteur de carte mémoire (40, 41).

7. Dispositif selon la revendication 6, comprenant en outre un écran d'affichage (35) pouvant être vu via le boîtier pour fournir une indication visuelle d'informations relatives à des données stockées dans la puce de mémoire flash (13) ou une carte mémoire (40a, 41a) insérée dans le connecteur de carte mémoire (40, 41).

8. Dispositif selon la revendication 1, dans lequel la carte mémoire (40a, 41a) est l'un : d'un compact flash ; d'un microdrive ; d'une carte multimédia (MMC) ; d'une carte Secure Digital (SD) ; d'une carte Smart Media ; d'une carte mémoire miniature et d'une carte MMC-micro.

9. Dispositif selon la revendication 1, dans lequel les connecteurs mâle et femelle (9, 11) sont des connecteurs USB.

10. Procédé de transfert de données dans un dispositif de stockage et de transfert de données (1) comprenant : (a) la fourniture d'un dispositif de stockage et de transfert de données (1) comportant la combinaison d'une puce de mémoire flash (13) pour stocker des données, d'un connecteur de carte mémoire (40, 41), d'un connecteur mâle (9) et d'un connecteur femelle (11) configuré pour s'accoupler avec le connecteur mâle (9) ;
(b) l'insertion d'une carte mémoire (40a, 41a) dans le connecteur de carte mémoire (40, 41) ; et
(c) le fait d'amener des données à passer à ou de la carte mémoire (40a, 41a) depuis ou à au moins la puce de mémoire flash (13) ou via l'un des connecteurs (9, 11) lorsque ledit connecteur (9, 11) est connecté à un connecteur d'accouplement (53) d'un autre dispositif (51).

11. Procédé selon la revendication 10, dans lequel le dispositif (1) comprend en outre un moyen (15) pour régler un lecteur de mémoire pour faire passer des données à ou depuis au moins l'une de la carte mémoire (40a, 41a) ou la puce de mémoire flash (13) via le premier connecteur (9, 11) lorsqu'elle est connectée au connecteur d'accouplement (53) de l'autre dispositif (51).

12. Procédé selon la revendication 10, dans lequel le dispositif (1) comprend en outre un moyen (15) pour lancer le transfert de données depuis au moins l'une de la carte mémoire (40a, 41a) ou de la puce de mémoire flash (13) via le premier connecteur (9, 11) lorsqu'elle est connectée au connecteur d'accouplement (53) de l'autre dispositif (51).

13. Dispositif de stockage et de transfert de données selon la revendication 1, comprenant en outre un boîtier (8),
dans lequel le connecteur mâle (9) est un connecteur USB mâle au moins partiellement disposé à l'intérieur du boîtier (8), le connecteur femelle (11) est un connecteur USB femelle au moins partiellement disposé à l'intérieur du boîtier (8), la puce de mémoire flash (13) est disposée dans le boîtier (8), le connecteur de carte mémoire (40, 41) est au moins partiellement disposé à l'intérieur du boîtier (8), et le moyen (15) pour commander un transfert de données est disposé dans le boîtier (8).

14. Dispositif selon la revendication 13, comprenant en outre au moins l'un : d'une batterie (19) couplée pour alimenter en énergie la puce de mémoire flash (13) et le moyen (15) pour permettre le passage de données ; d'un moyen pour faciliter la connexion électrique d'au moins l'un desdits connecteurs USB (9, 11) au connecteur d'accouplement (53) d'un autre dispositif (51) ; d'un moyen pour lancer le transfert de données ; d'un moyen pour sélectionner la puce de mémoire flash (13) ou la carte mémoire flash (40a, 41a) à ou depuis laquelle transférer des données ; et d'un moyen (25) pour indiquer que le transfert de données est en cours.

15. Dispositif selon la revendication 13, comprenant en outre un commutateur (23) pour amener des données à être transférées à ou depuis la puce de mémoire flash (13) ou la carte mémoire flash (40a, 41a) en fonction du réglage du commutateur (23).
